# EUROPEAN PATENT SPECIFICATION

(11) **EP 4 140 772 B1**
(45) Date of publication and mention of the grant of the patent: **03.07.2024**
(21) Application number: 22185909.3
(22) Date of filing: 20.07.2022
(51) Int. Cl.: B60C 11/00, B60C 11/03

(54) **TIRE**
REIFEN
PNEU

(30) Priority: 24.08.2021 JP 2021135996
(43) Date of publication of application: 01.03.2023
(73) Proprietor: SUMITOMO RUBBER INDUSTRIES, LTD., Kobe-shi, Hyogo 651-0072 (JP)
(72) Inventor: OZAWA, Miyu, Kobe-shi, Hyogo 651-0072 (JP)
(74) Representative: Winter, Brandl - Partnerschaft mbB

(56) References cited:
- EP-A1- 4 019 280
- JP-A- 2005 035 404
- JP-A- 2018 002 008
- JP-B2- 5 912 794

## Description

### BACKGROUND OF THE INVENTION

### Field of the Invention

The present invention relates to a tire.

### Background Art

A tire having low rolling resistance is obtained when a rubber that has low-heat generation properties is used for a tread. The rubber that has low-heat generation properties is inferior to a rubber that has heat generation properties, in terms of grip force. Therefore, when a rubber that has low-heat generation properties is used for a tread, for example, braking performance (hereinafter, also referred to as wet performance) on a wet road surface is decreased. It is difficult to balance rolling resistance and wet performance well. Various studies have been made in order to achieve reduction of rolling resistance and improvement of wet performance (for example, Japanese Laid-Open Patent Publication No. 2018-2008).

From consideration for the environment, further reduction of the rolling resistance of tires is required.

Normally, a negative camber is given to a tire mounted on a vehicle. Therefore, the ground-contact length of the tire is longer on the inner side in the width direction of the vehicle, and is shorter on the outer side of the width direction of the vehicle. It is expected that further reduction of rolling resistance and further improvement of wet performance can be achieved by taking into consideration the ground-contact shape of the tire mounted on the vehicle.
Document JP 2005 035404 A discloses a tire comprising a tread including a base layer, an intermediate layer, and a cap layer, wherein a loss tangent at 70°C of the intermediate layer is lower than a loss tangent at 70°C of the cap layer a loss tangent 70°C of the base layer is lower than the loss tangent at 70°C of the intermediate layer, and wherein at least three circumferential grooves are formed on the thread, and at least four land portions are formed in the thread. Documents JP 2018 002008 A and EP 4 019 280 A1 disclose further tires including a plurality of layers, circumferential grooves and land portions.

The present invention has been made in view of such circumstances, and an object of the present invention is to provide a tire that can achieve improvement of wet performance while reducing rolling resistance.

### SUMMARY OF THE INVENTION

The present inventor has found that as for the contribution to exertion of a grip force, the contribution of an outside tread, of a tread, which is a portion located outward of an inside tread which is a portion located on the inner side of a passenger car (hereinafter, also referred to as a vehicle), is higher, and thus has completed the present invention. Specifically, a tire according to an aspect of the present invention includes a tread forming a tread surface. A direction of the tread with respect to a vehicle is designated; and of both ends of the tread, an end located on an inner side in a width direction of the vehicle is a first end, and an end located on an outer side in the width direction of the vehicle is a second end. The tread includes a base layer, an intermediate layer located outward of the base layer in a radial direction and covering the base layer, and a cap layer located outward of the intermediate layer in the radial direction and covering the intermediate layer. The cap layer includes the tread surface. A loss tangent at 30°C of the intermediate layer is lower than a loss tangent at 30°C of the cap layer, and a loss tangent at 30°C of the base layer is lower than the loss tangent at 30°C of the intermediate layer, wherein the loss tangents are determined according to the standards of JIS K6394 at a temperature of 30°C, at an initial strain of 10%, at a dynamic strain of 2%, at a frequency of 10 Hz, under the deformation mode tension. At least three circumferential grooves are formed on the tread, whereby at least four land portions are formed in the tread. A ground-contact surface obtained when a load that is 50% of a normal load is applied to the tire and the tire is brought into contact with a flat road surface in a state where the tire is fitted on a normal rim, an internal pressure of the tire is adjusted to a normal internal pressure, and a camber angle of the tire is set to -1°, is a reference ground-contact surface; in the reference ground-contact surface, a land portion having a longest ground-contact length is a longest land portion, and a land portion having a shortest ground-contact length is a shortest land portion, in the reference ground-contact surface, the longest land portion is formed in an inside tread which is located on the inner side in a width direction of the vehicle, and the shortest land portion is formed in an outside tread which is located on the outer side in a width direction of the vehicle; and a ratio of a thickness of the intermediate layer in the longest land portion to a thickness of the intermediate layer in the shortest land portion is greater than 1.0 and not greater than 3.5.

Preferably, in the tire, the intermediate layer is thicker on the first end side and thinner on the second end side.

Preferably, in the tire, a ground-contact surface obtained when a load that is 70% of a normal load is applied to the tire and the tire is brought into contact with a flat road surface in a state where the tire is fitted on the normal rim, the internal pressure of the tire is adjusted to 230 kPa, and the camber angle of the tire is set to 0°, is a standard ground-contact surface, and a ratio of a width which is a distance in the axial direction from a boundary between a thicker zone of the intermediate layer on the first end side and a thinner zone of the intermediate layer on the second end side to a standard ground-contact end corresponding to an outer end in the axial direction of a ground-contact surface of the tire that is in contact with a road surface to a ground-contact width of the standard ground-contact surface in the standard ground-contact surface is not less than 40% and not greater than 100%.

Preferably, in the tire, in a meridian cross-section of the tire in a state where the tire is fitted on the normal rim, the internal pressure of the tire is adjusted to 230 kPa, and no load is applied to the tire, a contour of the tread surface is represented by a plurality of curved contour lines each composed of an arc and aligned in the axial direction, a curved contour line located at a center, among the plurality of curved contour lines, is a center curved contour line, and the center curved contour line has a radius of not less than 500 mm and not greater than 1000 mm.

Preferably, in the tire, a ratio of the loss tangent at 30°C of the cap layer to the loss tangent at 30°C of the intermediate layer is not less than 125% and not greater than 200%, wherein the loss tangents are determined according to the standards of JIS K6394 at a temperature of 30°C, at an initial strain of 10%, at a dynamic strain of 2%, at a frequency of 10 Hz, under the deformation mode tension.

According to the present invention, a tire that can achieve improvement of wet performance while reducing rolling resistance is obtained.

### BRIEF DESCRIPTION OF THE DRAWINGS

FIG. 1 is a cross-sectional view showing a part of a tire according to an embodiment of the present invention;
FIG. 2 is an enlarged cross-sectional view showing a contour of a shoulder portion of the tire;
FIG. 3 is an image diagram illustrating a camber angle of the tire;
FIG. 4 is an image diagram illustrating a reference ground-contact surface;
FIG. 5 is a cross-sectional view showing a contour of a tread surface;
FIG. 6 is a cross-sectional view showing a part of a tire of Comparative Example 2 not being part of the invention; and
FIG. 7 is a cross-sectional view showing a part of a tire of Comparative Example 3 not being part of the invention.

### DETAILED DESCRIPTION

Hereinafter, the present invention will be described in detail based on preferred embodiments with appropriate reference to the drawings.

In the present invention, a state where a tire is fitted on a normal rim, the internal pressure of the tire is adjusted to a normal internal pressure, and no load is applied to the tire is referred to as a normal state.

A state where a tire is fitted on a normal rim, the internal pressure of the tire is adjusted to 230 kPa, and no load is applied to the tire is referred to as a standard state.

In the present invention, unless otherwise specified, the dimensions and angles of each component of the tire are measured in the normal state. The dimensions and angles that cannot be measured in a state where the tire is fitted on the normal rim are measured in a cross-section of the tire obtained by cutting the tire along a plane including a rotation axis, with the distance between left and right beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

The normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a loss tangent (also referred to as tanδ), at a temperature of 30°C, of a component formed from a crosslinked rubber, of the components included in the tire, is measured using a viscoelasticity spectrometer ("VES" manufactured by Iwamoto Seisakusho) under the following conditions according to the standards of JIS K6394.
Initial strain = 10%
Dynamic strain = 2%
Frequency = 10 Hz
Deformation mode = tension

In this measurement, a test piece is sampled from the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

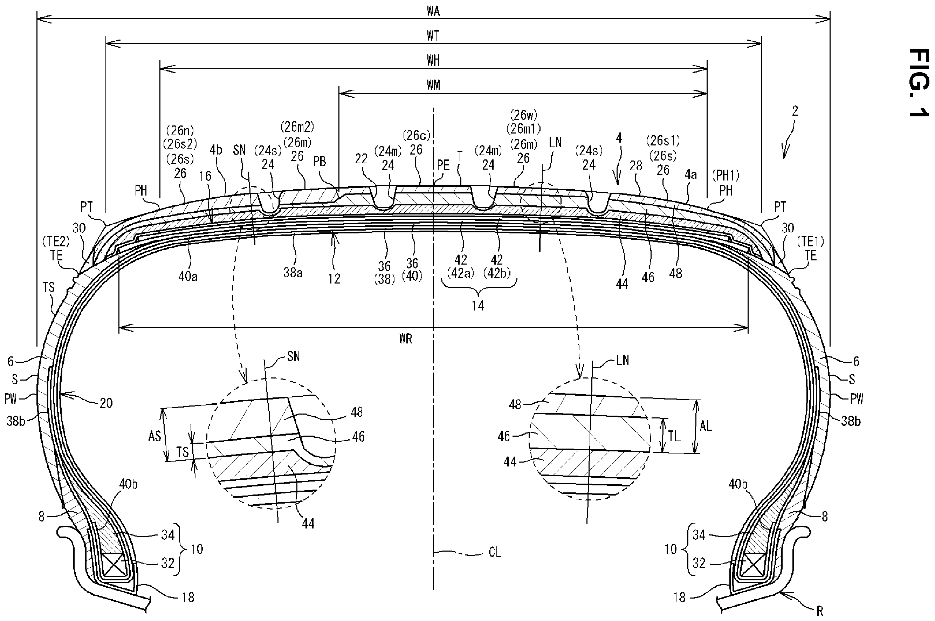

FIG. 1 shows a part of a tire 2 according to an embodiment of the present invention. The tire 2 is a tire for a passenger car. FIG. 1 shows a part of a cross-section (hereinafter, also referred to as a meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2.

In FIG. 1, an alternate long and short dash line CL represents the equator plane of the tire 2. The tire 2 is symmetrical about the equator plane CL except for a tread pattern and decorations such as patterns and letters formed on the outer surface thereof and the internal configuration of a tread described later.

The tire 2 is fitted on a rim R. The rim R is a normal rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

In FIG. 1, a position indicated by reference character PW is an outer end in the axial direction of the tire 2. In the case where decorations such as patterns and letters are present on the outer surface of the tire 2, the outer end PW is specified on the basis of a virtual outer surface obtained on the assumption that the decorations are not present.

In FIG. 1, a length indicated by reference character WA is the maximum width of the tire 2, that is, the cross-sectional width (see JATMA or the like) of the tire 2. The cross-sectional width WA of the tire 2 is the distance in the axial direction from one outer end PW to the other outer end PW. Each outer end PW is a position (hereinafter, referred to as a maximum width position) at which the tire 2 has the maximum width. The cross-sectional width WA is measured in the tire 2 in the standard state.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 forms a tread surface T. The tire 2 comes into contact with a road surface at the tread surface T. Grooves 22 are formed on the tread 4. Accordingly, a tread pattern is formed.

The grooves 22 forming the tread pattern include circumferential grooves 24 continuously extending in the circumferential direction. In the tire 2, at least three circumferential grooves 24 are formed on the tread 4. Accordingly, at least four land portions 26 are formed in the tread 4. In the tire 2 shown in FIG. 1, five land portions 26 are formed by forming four circumferential grooves 24 on the tread 4.

The tread 4 of the tire 2 includes a tread body 28 and a pair of wings 30. Each wing 30 is located outward of the tread body 28 in the axial direction. The wing 30 joins the tread body 28 and the sidewall 6. The wing 30 is formed from a crosslinked rubber for which adhesiveness is taken into consideration.

In FIG. 1, a position indicated by reference character TE is an end of the tread 4. In the tire 2, the direction of the tread 4 with respect to a vehicle is designated. The end TE of the tread 4 located on the right side in the surface of the drawing sheet of FIG. 1 is a first end TE1, and the end TE of the tread 4 located on the left side therein is a second end TE2. When the tire 2 is mounted on the vehicle, the first end TE1 of the tread 4 of both ends TE of the tread 4 is located on the inner side in the width direction of the vehicle. The second end TE2 of the tread 4 is located on the outer side in the width direction of the vehicle.

In FIG. 1, a position indicated by reference character PE corresponds to the equator of the tire 2. The equator PE is the point of intersection of the tread surface T and the equator plane CL. In the case where the groove 22 is present on the equator plane CL, the equator PE is specified on the basis of a virtual tread surface obtained on the assumption that the groove 22 is not present on the equator plane CL.

In the tire 2, of the tread 4, a portion from the equator PE to the first end TE1 is also referred to as an inside tread 4a, and a portion from the equator PE to the second end TE2 is also referred to as an outside tread 4b.

In FIG. 1, a position indicated by reference character PH is a position on the tread surface T. The position PH corresponds to an outer end in the axial direction of a ground-contact surface of the tire 2 that is in contact with a road surface.

The ground-contact surface for specifying the position PH is obtained, for example, using a ground-contact surface shape measuring device (not shown). The ground-contact surface is obtained when a load that is 70% of the normal load is applied as a vertical load to the tire 2 in the standard state and the tire 2 is brought into contact with a flat road surface with a camber angle of the tire 2 being set to 0°, on this device. In the tire 2, the ground-contact surface obtained as described above is a standard ground-contact surface, and the position, on the tread surface T, corresponding to each outer end in the axial direction of the standard ground-contact surface is the above-described position PH. In the tire 2, the position PH is a standard ground-contact end. In FIG. 1, a length indicated by reference character WH is the ground-contact width of the standard ground-contact surface. The ground-contact width WH is the distance in the axial direction from one standard ground-contact end PH to the other standard ground-contact end PH. The ground-contact width WH is measured on the tire 2 in the standard state.

Each sidewall 6 is connected to the end TE of the tread 4. The sidewall 6 is located inward of the tread 4 in the radial direction. The sidewall 6 extends from the end TE of the tread 4 toward the clinch 8 along the carcass 12. The sidewall 6 is formed from a crosslinked rubber for which cut resistance is taken into consideration.

Each clinch 8 is located inward of the sidewall 6 in the radial direction. The clinch 8 comes into contact with the rim R. The clinch 8 is formed from a crosslinked rubber for which abrasion resistance is taken into consideration.

Each bead 10 is located inward of the clinch 8 in the axial direction. The bead 10 includes a core 32 and an apex 34. Although not shown, the core 32 includes a wire made of steel.

The apex 34 is located outward of the core 32 in the radial direction. The apex 34 is tapered outward. The apex 34 is formed from a crosslinked rubber that has high stiffness.

The carcass 12 is located inward of the tread 4, the pair of sidewalls 6, and the pair of clinches 8. The carcass 12 extends on and between one bead 10 and the other bead 10. The carcass 12 has a radial structure.

The carcass 12 includes at least one carcass ply 36. The carcass 12 of the tire 2 is composed of two carcass plies 36. The carcass ply 36 located radially inward on the inner side of the tread 4 is a first carcass ply 38, and the carcass ply 36 located outward of the first carcass ply 38 is a second carcass ply 40. From the viewpoint of weight reduction, the carcass 12 may be composed of one carcass ply 36.

The first carcass ply 38 includes a first ply body 38a which extends on and between one core 32 and the other core 32, and a pair of first turned-up portions 38b which are connected to the first ply body 38a and turned up around the respective cores 32 from the inner side toward the outer side in the axial direction.

The second carcass ply 40 includes a second ply body 40a which extends on and between one core 32 and the other core 32, and a pair of second turned-up portions 40b which are connected to the second ply body 40a and turned up around the respective cores 32 from the inner side toward the outer side in the axial direction.

Each carcass ply 36 includes a large number of carcass cords aligned with each other, which are not shown. Each carcass cord intersects the equator plane CL. The carcass cords are cords formed from an organic fiber. Examples of the organic fiber include nylon fibers, rayon fibers, polyester fibers, and aramid fibers.

The belt 14 is located inward of the tread 4 in the radial direction. The belt 14 is stacked on the carcass 12 from the outer side in the radial direction. In FIG. 1, a length indicated by reference character WR is the width in the axial direction of the belt 14. The width WR in the axial direction is the distance in the axial direction from one end of the belt 14 to the other end of the belt 14. In the tire 2, the width WR in the axial direction of the belt 14 is not less than 65% and not greater than 85% of the cross-sectional width WA.

The belt 14 includes at least two layers 42 stacked in the radial direction. The belt 14 of the tire 2 is composed of two layers 42 stacked in the radial direction. Of the two layers 42, the layer 42 located on the inner side is an inner layer 42a, and the layer 42 located on the outer side is an outer layer 42b. As shown in FIG. 1, the inner layer 42a is wider than the outer layer 42b. The length from the end of the outer layer 42b to the end of the inner layer 42a is not less than 3 mm and not greater than 10 mm.

Each of the inner layer 42a and the outer layer 42b includes a large number of belt cords aligned with each other, which are not shown. Each belt cord is inclined relative to the equator plane CL. The material of each belt cord is steel.

The band 16 is located between the tread 4 and the belt 14 in the radial direction. The band 16 is stacked on the belt 14 on the inner side of the tread 4. The band 16 has a jointless structure.

The band 16 includes a helically wound band cord which is not shown. The band cord extends substantially in the circumferential direction. Specifically, an angle of the band cord with respect to the circumferential direction is not greater than 5°. In the tire 2, a cord formed from an organic fiber is used as the band cord. Examples of the organic fiber include nylon fibers, rayon fibers, polyester fibers, and aramid fibers.

In the tire 2, the band 16 is formed as a full band in which both ends oppose each other across the equator PE. The band 16 is wider than the belt 14. The length from the end of the belt 14 to the end of the band 16 is not less than 3 mm and not greater than 7 mm. The band 16 covers the belt 14 from the outer side in the radial direction. The band 16 may include a pair of edge bands that are spaced apart from each other in the axial direction and cover the ends of the full band and the ends of the belt 14. The band 16 may be composed of a pair of edge bands only.

Each chafer 18 is located radially inward of the bead 10. The chafer 18 comes into contact with the rim R. The chafer 18 of the tire 2 includes a fabric and a rubber with which the fabric is impregnated.

The inner liner 20 is located inward of the carcass 12. The inner liner 20 forms an inner surface of the tire 2. The inner liner 20 is formed from a crosslinked rubber that has a low gas permeability coefficient. The inner liner 20 maintains the internal pressure of the tire 2.

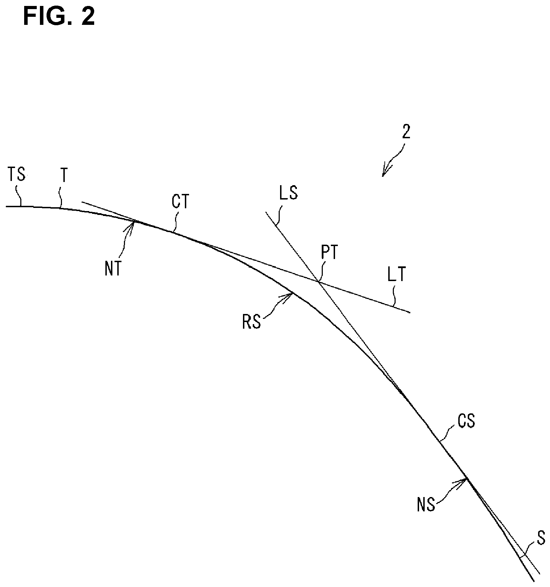

FIG. 2 shows a part of the tire 2 shown in FIG. 1. In FIG. 2, the right-left direction is the axial direction of the tire 2, and the up-down direction is the radial direction of the tire 2. The direction perpendicular to the surface of the drawing sheet of FIG. 2 is the circumferential direction of the tire 2.

FIG. 2 shows a contour of a shoulder portion of the tire 2 in the meridian cross-section. The contour shown in FIG. 2 is obtained by measuring the outer surface shape of the tire 2 in the standard state by a displacement sensor. FIG. 2 shows a contour of the outer surface of the tire 2 in the meridian cross-section of the tire 2 in the standard state.

For example, the grooves 22 are formed on the tread 4. Decorations such as patterns and letters are provided on each sidewall 6. Therefore, the outer surface shape of the tire 2 obtained by measurement includes irregularities corresponding to the grooves 22 and the decorations such as patterns and letters. The contour of the outer surface of the tire 2 is represented by a virtual outer surface obtained on the assumption that such irregularities are not present.

In the meridian cross-section, the contour of the outer surface (hereinafter, referred to as a tire outer surface TS) of the tire 2 is formed by connecting a plurality of contour lines each formed as a straight line or an arc. In the present invention, the contour line formed as a straight line or an arc is referred to simply as a contour line. The contour line formed as a straight line is referred to as a straight contour line, and the contour line formed as an arc is referred to as a curved contour line.

The tire outer surface TS includes the tread surface T and a pair of side surfaces S connected to the ends of the tread surface T. In the meridian cross-section, the contour of the tread surface T includes a plurality of curved contour lines having different radii. In the tire 2, among the plurality of curved contour lines included in the contour of the tread surface T, a curved contour line having the smallest radius is located at the end portion of the tread surface T and is connected to the side surface S. In the meridian cross-section, the contour of the tire outer surface TS includes, on each end portion of the tread surface T, a curved line portion that is a curved contour line connected to the side surface S and formed as an arc having the smallest radius among the plurality of curved contour lines included in the contour of the tread surface T. In FIG. 2, the curved line portion is indicated by reference character RS.

In the contour of the tire outer surface TS, the curved line portion RS is tangent to a contour line (hereinafter, referred to as inner adjacent contour line NT) adjacent to the curve line portion RS on the inner side in the axial direction, at a contact point CT. The curved line portion RS is tangent to a contour line (hereinafter, referred to as outer adjacent contour line NS) that is adjacent to the curve line portion RS on the outer side in the axial direction and forms a contour of the side surface S, at a contact point CS. The contour of the tire outer surface TS includes the inner adjacent contour line NT which is located axially inward of the curved line portion RS and is tangent to the curved line portion RS, and the outer adjacent contour line NS which is located axially outward of the curved line portion RS and is tangent to the curved line portion RS.

In FIG. 2, a solid line LT is a line tangent to the curved line portion RS at the contact point CT between the inner adjacent contour line NT and the curved line portion RS. A solid line LS is a line tangent to the curved line portion RS at the contact point CS between the outer adjacent contour line NS and the curved line portion RS. A position indicated by reference character PT is the point of intersection of the tangent line LT and the tangent line LS. In the tire 2, the point of intersection PT is a tread reference end.

In FIG. 1, a length indicated by a double-headed arrow WT is a tread width. The tread width WT is the distance in the axial direction from one tread reference end PT to the other tread reference end PT. In the tire 2, the ratio (WT/WA) of the tread width WT to the cross-sectional width WA is not less than 70% and not greater than 90%. The ratio (WH/WT) of the ground-contact width WH of the standard ground-contact surface to the tread width WT is not less than 70% and not greater than 90%.

As described above, the four circumferential grooves 24 are formed on the tread 4 of the tire 2. In the tire 2, the arrangement, the groove depths, and the groove widths of the four circumferential grooves 24 are not particularly limited. As the arrangement, the groove depths, and the groove widths of the circumferential grooves of the tire, a typical arrangement, groove depth, and groove width are applied to the tread 4.

In the tire 2, among the four circumferential grooves 24, the circumferential groove 24 located on each outer side in the axial direction is a shoulder circumferential groove 24s. The circumferential groove 24 located inward of the shoulder circumferential groove 24s is a middle circumferential groove 24m.

As described above, the five land portions 26 are formed in the tread 4 of the tire 2. Among the five land portions 26, the land portion 26 located on each outer side in the axial direction is a shoulder land portion 26s. The land portion 26 located inward of the shoulder land portion 26s in the axial direction is a middle land portion 26m. The land portion 26 located between the left and right middle land portions 26m is a center land portion 26c. The center land portion 26c is located on the equator plane CL.

In the tire 2, the shoulder land portion 26s on the first end TE1 side of the tread 4 is a first shoulder land portion 26s1, and the shoulder land portion 26s on the second end TE2 side of the tread 4 is a second shoulder land portion 26s2. The middle land portion 26m on the first end TE1 side of the tread 4 is a first middle land portion 26m1, and the middle land portion 26m on the second end TE2 side of the tread 4 is a second middle land portion 26m2.

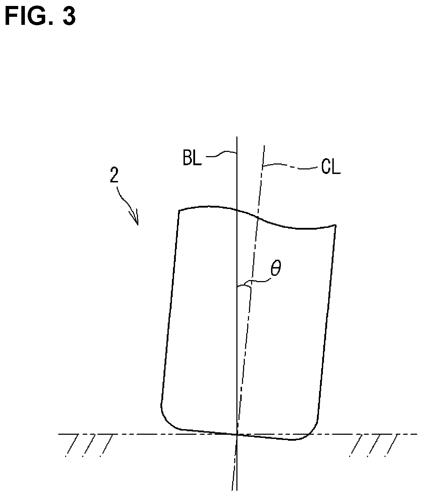

FIG. 3 shows a state of the tire 2 mounted on a vehicle (not shown). On the surface of the drawing sheet of FIG. 3, the right side is the inner side in the width direction of the vehicle, and the left side is the outer side in the width direction of the vehicle.

As shown in FIG. 3, the tire 2 is usually mounted on the vehicle such that the equator plane CL thereof is inclined relative to a road surface. In FIG. 3, a solid line indicated by reference character BL is a straight line orthogonal to a flat road surface with which the tire 2 comes into contact. When the road surface extends horizontally, the straight line BL is also referred to as a vertical line. An angle θ is an angle of the equator plane CL with respect to the straight line BL. The angle θ is also referred to as a camber angle. The tire 2 shown in FIG. 3 is mounted on the vehicle such that an upper portion of the equator plane CL is located inward of a lower portion of the equator plane CL in the width direction of the vehicle. The camber angle of the tire 2 mounted as described above is also referred to as a negative camber, and is represented by a negative angle. The tire 2 shown in FIG. 3 is in a state where a negative camber is given thereto.

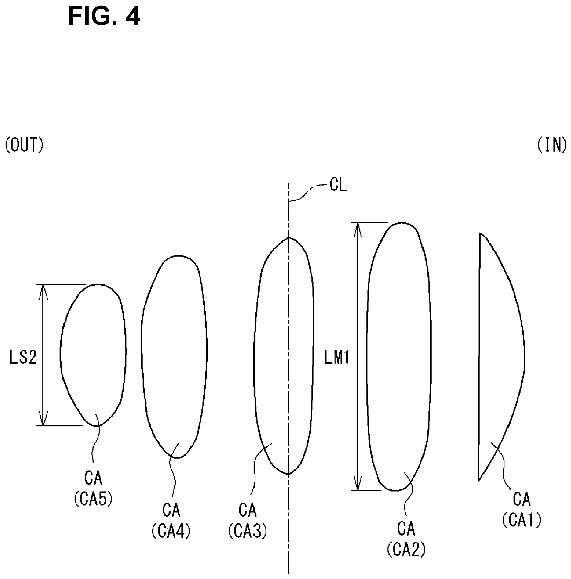

FIG. 4 shows an image of a ground-contact surface of the tire 2. In FIG. 4, the up-down direction corresponds to the circumferential direction of the tire 2, and the right-left direction corresponds to the axial direction of the tire 2. On the surface of the drawing sheet of FIG. 4, the right side is the inner side in the width direction of the vehicle, that is, the first end TE1 side of the tread 4. On this surface of the drawing sheet, the left side is the outer side in the width direction of the vehicle, that is, the second end TE2 side of the tread 4.

The ground-contact surface is obtained, for example, using the above-described ground-contact surface shape measuring device (not shown). The ground-contact surface is obtained when a load that is 50% of the normal load is applied as a vertical load to the tire 2 in the normal state and the tire 2 is brought into contact with a road surface formed as a flat surface, with the camber angle θ of the tire 2 being set to -1°, on this device. In the present invention, the ground-contact surface is a reference ground-contact surface.

Normally, a negative camber is given to a tire mounted on a vehicle (specifically, a passenger car). The reference ground-contact surface is a ground-contact surface for which the ground-contact state of the tire mounted on the vehicle is taken into consideration.

As described above, the five land portions 26 are formed in the tread 4 of the tire 2. The reference ground-contact surface includes ground-contact surfaces CA corresponding to the five land portions 26. In FIG. 4, a ground-contact surface CA1 of the first shoulder land portion 26s 1, a ground-contact surface CA2 of the first middle land portion 26m 1, a ground-contact surface CA3 of the center land portion 26c, a ground-contact surface CA4 of the second middle land portion 26m2, and a ground-contact surface CA5 of the second shoulder land portion 26s2 are shown in this order from the right side in the surface of the drawing sheet.

In FIG. 4, a length indicated by reference character LM1 is the ground-contact length of the ground-contact surface CA2 of the first middle land portion 26m1. A length indicated by reference character LS2 is the ground-contact length of the ground-contact surface CA5 of the second shoulder land portion 26s2.

In the tire 2, among the five land portions 26 included in the reference ground-contact surface, the ground-contact surface CA2 of the first middle land portion 26m1 has the longest ground-contact length. The ground-contact surface CA5 of the second shoulder land portion 26s2 has the shortest ground-contact length. In the present invention, among the land portions 26 included in the reference ground-contact surface, the land portion 26 having the longest ground-contact length is a longest land portion 26w, and the land portion 26 having the shortest ground-contact length is a shortest land portion 26n. In the tire 2, the first middle land portion 26m1 is the longest land portion 26w, and the second shoulder land portion 26s2 is the shortest land portion 26n.

As shown in FIG. 1, the tread 4 (specifically, the tread body 28) of the tire 2 includes a base layer 44, an intermediate layer 46, and a cap layer 48.

The base layer 44 is located inward of the intermediate layer 46 and the cap layer 48 in the radial direction. The base layer 44 is located outward of the band 16 in the radial direction. The base layer 44 is stacked on the band 16. The base layer 44 covers the band 16 from the outer side in the radial direction.

The intermediate layer 46 is located between the base layer 44 and the cap layer 48 in the radial direction. The intermediate layer 46 is located outward of the base layer 44 in the radial direction. The intermediate layer 46 is stacked on the base layer 44. The intermediate layer 46 covers the base layer 44 from the outer side in the radial direction.

The cap layer 48 is located outward of the base layer 44 and the intermediate layer 46 in the radial direction. The cap layer 48 includes the tread surface T. The cap layer 48 is located outward of the intermediate layer 46 in the radial direction. The cap layer 48 is stacked on the intermediate layer 46. The cap layer 48 covers the intermediate layer 46 from the outer side in the radial direction.

The base layer 44, the intermediate layer 46, and the cap layer 48 are formed from crosslinked rubbers having different heat generation properties, respectively. In the tire 2, a loss tangent LTm at 30°C of the intermediate layer 46 is lower than a loss tangent LTc at 30°C of the cap layer 48. A loss tangent LTb at 30°C of the base layer 44 is lower than the loss tangent LTm at 30°C of the intermediate layer 46.

In the tire 2, the cap layer 48 is most likely to generate heat and contributes to exertion of the grip force of the tire 2. The base layer 44 is least likely to generate heat and contributes to reduction of the rolling resistance of the tire 2. The intermediate layer 46 is less likely to generate heat than the cap layer 48, and is more likely to generate heat than the base layer 44. The intermediate layer 46 contributes more to reduction of rolling resistance than the cap layer 48, and contributes more to exertion of a grip force than the base layer 44.

Each land portion 26 formed in the tread 4 is composed of three layers, that is, the base layer 44, the intermediate layer 46, and the cap layer 48. As shown in FIG. 4, the ground-contact length of the land portion 26 is different depending on the position on the reference ground-contact surface. As described above, the reference ground-contact surface is a ground-contact surface for which the ground-contact state of the tire mounted on the vehicle is taken into consideration.

The present inventor has conducted a thorough study for a tread in consideration of the ground-contact shape of a tire mounted on a vehicle, and, as a result, the present inventor has found that, as for the contribution to exertion of a grip force, the contribution of an outside tread, of a tread, which is a portion located outward of an inside tread which is a portion located on the inner side of a passenger car (hereinafter, also referred to as a vehicle), is higher, and has completed the present invention by conducting a study for mainly forming the outside tread from a rubber having heat generation properties and mainly forming the inside tread from a rubber having low-heat generation properties, focusing on the thickness of an intermediate layer in a land portion in order to reduce rolling resistance while ensuring wet performance.

In the present invention, the thickness of the intermediate layer 46 in each shoulder land portion 26s is measured as the thickness of the intermediate layer 46 that is measured along a normal line, of the interface between the intermediate layer 46 and the base layer 44, passing through a reference position that is a position on the tread surface T away from the boundary between the shoulder land portion 26s and the shoulder circumferential groove 24s on the tread surface T, that is, the edge of the shoulder land portion 26s, by 5 mm. In FIG. 1, a straight line indicated by reference character SN is a normal line, of the interface between the intermediate layer 46 and the base layer 44, passing through a position away from the edge of the second shoulder land portion 26s2 by 5 mm. The thickness of the intermediate layer 46 in the second shoulder land portion 26s2 is measured along the normal line SN.

In the present invention, the thickness of the intermediate layer 46 in each land portion 26 other than the shoulder land portions 26s is represented by the thickness of the intermediate layer 46 that is measured along a normal line, of the interface between the intermediate layer 46 and the base layer 44, passing through a reference position that is the width center of the land portion 26 on the tread surface T. In FIG. 1, a straight line indicated by reference character LN is a normal line, of the interface between the intermediate layer 46 and the base layer 44, passing through the width center of the first middle land portion 26m1. The thickness of the intermediate layer 46 in the first middle land portion 26m1 is measured along the normal line LN.

As described above, in the tire 2, the first middle land portion 26m1 is the longest land portion 26w, and the second shoulder land portion 26s2 is the shortest land portion 26n.

In FIG. 1, a length indicated by reference character TL is the thickness of the intermediate layer 46 in the first middle land portion 26m1 which is the longest land portion 26w. A length indicated by reference character TS is the thickness of the intermediate layer 46 in the second shoulder land portion 26s2 which is the shortest land portion 26n.

In the present invention, in the case where the thickness of the intermediate layer 46 in the longest land portion 26w varies, the thickness TL of the intermediate layer 46 in the longest land portion 26w is represented not by the thickness at the above-described reference position but by the maximum thickness. In the case where the thickness of the intermediate layer 46 in the shortest land portion 26n varies, the thickness TS of the intermediate layer 46 in the shortest land portion 26n is represented not by the thickness at the above-described reference position but by the minimum thickness. In the case where the shoulder land portion 26s is the shortest land portion 26n, the minimum thickness is specified at a portion that overlaps the standard ground-contact surface in the radial direction.

In the tire 2, the cap layer 48 having excellent wear resistance covers the entirety of the intermediate layer 46 from the outside in the radial direction. Since the intermediate layer 46 which is disadvantageous in terms of wear resistance is not exposed on the tread surface T, specific wear is prevented from occurring on the tread 4. In the tire 2, uneven wear is less likely to occur.

In the tire 2, the longest land portion 26w is formed in the inside tread 4a which is located on the inner side when the tire 2 is mounted on a vehicle, and the shortest land portion 26n is formed in the outside tread 4b which is located on the outer side. The ratio (TL/TS) of the thickness TL of the intermediate layer 46 in the longest land portion 26w to the thickness TS of the intermediate layer 46 in the shortest land portion 26n is greater than 1.0 and not greater than 3.5.

In the tire 2, the intermediate layer 46 which contributes more to rolling resistance than the cap layer 48 is thicker in the longest land portion 26w. The tread 4 effectively contributes to reduction of rolling resistance.

Since the intermediate layer 46 is thinner in the shortest land portion 26n, in the tire 2, the thicker cap layer 48 can be formed in the outside tread 4b which contributes to exertion of a grip force. Since the cap layer 48 contributes more to a grip force than the intermediate layer 46, the tread 4 can contribute to improvement of a grip force. Since the ratio (TL/TS) is not greater than 3.5, the cap layer 48 having an appropriate thickness is formed in the inside tread 4a, and the intermediate layer 46 having an appropriate thickness is formed in the outside tread 4b.

The tire 2 can achieve improvement of wet performance while reducing rolling resistance.

As described above, in the tire 2, the ratio (TL/TS) is greater than 1.0 and not greater than 3.5. From the viewpoint of effectively contributing to reduction of rolling resistance and improvement of wet performance, the ratio (TL/TS) is preferably not less than 1.1, more preferably not less than 1.2, further preferably not less than 1.3, and particularly preferably not less than 1.4. From the same viewpoint, the ratio (TL/TS) is preferably not greater than 3.3, more preferably not greater than 3.1, further preferably not greater than 2.9, and particularly preferably not greater than 2.7.

As shown in FIG. 1, in the tire 2, the intermediate layer 46 is thicker on the first end TE1 side of the tread 4 and thinner on the second end TE2 side of the tread 4.

In the tire 2, the inside tread 4a effectively contributes to reduction of rolling resistance, and the outside tread 4b effectively contributes to exertion of a grip force. The tire 2 can achieve improvement of wet performance while reducing rolling resistance. From this viewpoint, the intermediate layer 46 is preferably thicker on the first end TE1 side of the tread 4 and thinner on the second end TE2 side of the tread 4. In the tire 2, more preferably, the intermediate layer 46 is thicker than the cap layer 48 on the first end TE1 side of the tread 4, and the intermediate layer 46 is thinner than the cap layer 48 on the second end TE2 side of the tread 4.

As described above, the intermediate layer 46 of the tire 2 is thicker on the first end TE1 side of the tread 4 and thinner on the second end TE2 side of the tread 4.

From the viewpoint of forming the intermediate layer 46 which can effectively contribute to reduction of rolling resistance and improvement of a grip force, preferably, the ratio of the thickness of the intermediate layer 46 to the total thickness of the intermediate layer 46 and the cap layer 48 on the first end TE1 side is set to be not less than 50%, and the ratio of the thickness of the intermediate layer 46 to the total thickness of the intermediate layer 46 and the cap layer 48 on the second end TE2 side is set to be not greater than 50%.

In FIG. 1, a position indicated by reference character PB represents the position at which the ratio of the thickness of the intermediate layer 46 to the total thickness of the intermediate layer 46 and the cap layer 48 is 50%. In the tire 2, the position PB is the boundary between a thicker zone of the intermediate layer 46 on the first end TE1 side and a thinner zone of the intermediate layer 46 on the second end TE2 side. In the tire 2, the boundary PB is preferably formed between the above-described longest land portion 26w and shortest land portion 26n.

In FIG. 1, a length indicated by reference character WM is the width in the axial direction of the thicker zone of the intermediate layer 46 formed on the first end TE1 side. This width in the axial direction is represented as the distance in the axial direction from the above-described boundary PB to the standard ground-contact end PH on the first end TE1 side (hereinafter, referred to as first standard ground-contact end PH1).

In the tire 2, the ratio (WM/WH) of the width WM in the axial direction of the thicker zone of the intermediate layer 46 to the ground-contact width WH of the standard ground-contact surface in the standard ground-contact surface is preferably not less than 40% and not greater than 100%.

When the ratio (WM/WH) is set to be not less than 40%, the inside tread 4a can effectively contribute to reduction of rolling resistance. From this viewpoint, the ratio (WM/WH) is more preferably not less than 50% and further preferably not less than 60%.

When the ratio (WM/WH) is set to be not greater than 100%, the outside tread 4b can contribute to ensuring a grip force. From this viewpoint, the ratio (WM/WH) is more preferably not greater than 85% and further preferably not greater than 75%.

In FIG. 1, a length indicated by reference character AL is the total thickness of the cap layer 48 and the intermediate layer 46 in the longest land portion 26w. The total thickness AL is measured along the normal line LN.

In the tire 2, from the viewpoint that the longest land portion 26w can effectively contribute to reduction of rolling resistance, the ratio (TL/AL) of the thickness TL of the intermediate layer 46 to the total thickness AL of the cap layer 48 and the intermediate layer 46 in the longest land portion 26w is preferably not less than 50% and more preferably not less than 60%. From the viewpoint of forming the cap layer 48 having an appropriate thickness in the longest land portion 26w, the ratio (TL/AL) is preferably not greater than 75%, more preferably not greater than 70%, and further preferably not greater than 65%.

In FIG. 1, a length indicated by reference character AS is the total thickness of the cap layer 48 and the intermediate layer 46 in the shortest land portion 26n. The total thickness AS is measured along the normal line SN.

In the tire 2, from the viewpoint that the shortest land portion 26n can effectively contribute to improvement of a grip force, the ratio (TS/AS) of the thickness TS of the intermediate layer 46 to the total thickness AS of the cap layer 48 and the intermediate layer 46 in the shortest land portion 26n is preferably not greater than 50% and more preferably not greater than 40%. From the viewpoint of forming the intermediate layer 46 having an appropriate thickness in the shortest land portion 26n, the ratio (TS/AS) is preferably not less than 20% and more preferably not less than 25%.

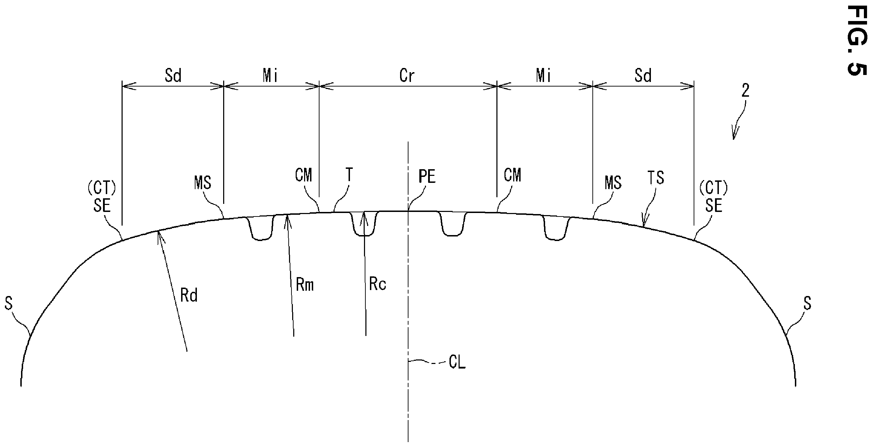

FIG. 5 shows a part of the tire 2 shown in FIG. 1. In FIG. 5, the right-left direction is the axial direction of the tire 2, and the up-down direction is the radial direction of the tire 2. The direction perpendicular to the surface of the drawing sheet of FIG. 5 is the circumferential direction of the tire 2.

FIG. 5 shows a contour of the tread surface T of the tire 2 in the meridian cross-section. Similar to the contour shown in FIG. 2, the contour shown in FIG. 5 is obtained by measuring the outer surface shape of the tire 2 in the standard state by a displacement sensor. FIG. 5 shows a contour of the tread surface T of the tire 2 in the meridian cross-section of the tire 2 in the standard state.

The tread surface T of the tire 2 is divided into a plurality of regions aligned in the axial direction in the meridian cross-section. The plurality of regions include a crown region Cr, a pair of middle regions Mi, and a pair of side regions Sd. The crown region Cr is located at the center in the axial direction. The crown region Cr includes the equator PE. Each middle region Mi is located outward of the crown region Cr in the axial direction. Each side region Sd is located outward of the middle region Mi in the axial direction.

In FIG. 5, a position indicated by reference character CM is the boundary between the crown region Cr and the middle region Mi. A position indicated by reference character MS is the boundary between the middle region Mi and the side region Sd. Reference character SE indicates the outer end of the side region Sd. The outer end SE is also the above-described contact point CT.

As described above, the contour of the tread surface T includes a plurality of curved contour lines having different radii. The contour of each region is represented by a curved contour line. In the tire 2, the curved contour line that represents the contour of the crown region Cr is also referred to as a center contour line. The curved contour line that represents the contour of the middle region Mi is also referred to as a middle contour line. The curved contour line that represents the contour of the side region Sd is also referred to as a side contour line. The plurality of curved contour lines included in the contour of the tread surface T include a center contour line, a pair of middle contour lines, and a pair of side contour lines. The center contour line is a curved contour line located at the center among the plurality of curved contour lines that represent the contour of the tread surface T.

Although not shown, the center of the center contour line is located on the equator plane CL. In FIG. 5, a one-sided arrow indicated by reference character Rc indicates the radius of the center contour line. Each middle contour line is tangent to the center contour line at the boundary CM. In FIG. 5, a one-sided arrow indicated by reference character Rm indicates the radius of the middle contour line. Each side contour line is tangent to the middle contour line at the boundary MS. In FIG. 5, a one-sided arrow indicated by reference character Rd indicates the radius of the side contour line.

In the tire 2, the radius Rc of the center contour line is preferably not less than 500 mm and not greater than 1000 mm. Accordingly, the tread 4 can sufficiently exert its function. In the tire 2, the above-described longest land portion 26w is formed axially outward of the position at which the distance in the axial direction from the first standard ground-contact end PH1 is 40% of the ground-contact width WH of the standard ground-contact surface, and the above-described shortest land portion 26n is formed axially outward of the position at which the distance in the axial direction from the first standard ground-contact end PH1 is 75% of the ground-contact width WH of the standard ground-contact surface. The tire 2 can achieve improvement of wet performance while reducing rolling resistance. From this viewpoint, the radius Rc of the center contour line is more preferably not less than 600 mm and further preferably not less than 700 mm. The radius Rc of the center contour line is more preferably not greater than 900 mm and further preferably not greater than 800 mm.

In the present invention, the radius of an arc that has a center on the equator plane CL and passes through the left and right edges of the center land portion 26c and the equator PE is used as the radius Rc of the center contour line. In a tread having a circumferential groove formed on the equator plane, the radius of an arc that has a center on the equator plane and passes through edges of land portions located on both sides of the circumferential groove is used as the radius Rc of the center contour line.

In the tire 2, the radius Rm of each middle contour line is smaller than the radius Rc of the center contour line, and the radius Rd of each side contour line is smaller than the radius Rm of each middle contour line. Accordingly, the respective contour lines are smoothly connected, and the tread 4 that can sufficiently exert its function is formed. In the tire 2, cornering stability and straight running stability are well balanced. From this viewpoint, the ratio (Rm/Rc) of the radius Rm of the middle contour line to the radius Rc of the center contour line is preferably not less than 0.50 and preferably not greater than 0.54. The ratio (Rd/Rc) of the radius Rd of the side contour line to the radius Rc of the center contour line is preferably not less than 0.20 and preferably not greater than 0.24.

In the tire 2, the loss tangent LTc at 30°C of the cap layer 48 is higher than the loss tangent LTm at 30°C of the intermediate layer 46. The cap layer 48 is likely to generate heat, and the intermediate layer 46 is less likely to generate heat. In the tire 2, the ratio (LTc/LTm) of the loss tangent LTc at 30°C of the cap layer 48 to the loss tangent LTm at 30°C of the intermediate layer 46 is preferably not less than 125% and not greater than 200%.

When the ratio (LTc/LTm) is set to be not less than 125%, the cap layer 48 effectively contributes to exertion of a grip force, and the intermediate layer 46 effectively contributes to reduction of rolling resistance. From this viewpoint, the ratio (LTc/LTm) is more preferably not less than 140% and further preferably not less than 155%.

When the ratio (LTc/LTm) is set to be not greater than 200%, the influence of the cap layer 48 on rolling resistance is suppressed. The difference between the amount of heat generated in the cap layer 48 and the amount of heat generated in the intermediate layer 46 is appropriately maintained, so that occurrence of damage due to the difference in the amount of heat generated is also prevented. From this viewpoint, the ratio (LTc/LTm) is more preferably not greater than 185% and further preferably not greater than 175%.

In the tire 2, the loss tangent LTb at 30°C of the base layer 44 is preferably not greater than 0.11. This is because the base layer 44 effectively contributes to reduction of rolling resistance. From this viewpoint, the loss tangent LTb is more preferably not greater than 0.10 and further preferably not greater than 0.09. In the tire 2, it is more preferable if the loss tangent LTb of the base layer 44 is lower, and thus a preferable lower limit is not set.

The loss tangent Ltm at 30°C of the intermediate layer 46 is preferably not greater than 0.15. This is because the intermediate layer 46 effectively contributes to reduction of rolling resistance. From this viewpoint, the loss tangent LTm is more preferably not greater than 0.14 and further preferably not greater than 0.13. The loss tangent LTm at 30°C of the intermediate layer 46 is preferably not less than 0.11. This is because the intermediate layer 46 can ensure required stiffness and can effectively contribute to improvement of wet performance. From this viewpoint, the loss tangent LTm is more preferably not less than 0.12.

The loss tangent LTc at 30°C of the cap layer 48 is preferably not less than 0.15. This is because the cap layer 48 can contribute to improvement of wet performance. From this viewpoint, the loss tangent LTc is more preferably not less than 0.16 and further preferably not less than 0.17. The cap layer 48 comes into contact with a road surface. From the viewpoint of improvement of wet performance, it is more preferable if the loss tangent LTc is higher. However, a higher loss tangent LTc causes heat generation. There is a concern that the heated cap layer 48 may raise the temperature of the intermediate layer 46 more than expected. From the viewpoint of being able to stably keep the temperature of the entirety of the tread 4 and maintain low rolling resistance, the loss tangent LTc at 30°C of the cap layer 48 is preferably not greater than 0.30, more preferably not greater than 0.28, and further preferably not greater than 0.27.

As described above, according to the present invention, a tire that can achieve improvement of wet performance while reducing rolling resistance is obtained.

### EXAMPLES

### [Example 1]

A pneumatic tire for a passenger car (tire size = 225/55R19) having the basic structure shown in FIG. 1 and having specifications shown in Table 1 below was obtained.

The radius Rc of the center curved contour line forming the contour of the tread surface was 750 mm.

The ratio (WM/WH) of the width WM in the axial direction of the thicker zone of the intermediate layer to the ground-contact width WH of the standard ground-contact surface in the standard ground-contact surface was 68%.

In Example 1, the total thickness AL in the longest land portion and the total thickness AS in the shortest land portion were equal to each other, and the ratio (TL/TS) of the thickness TL of the intermediate layer in the longest land portion to the thickness TS of the intermediate layer in the shortest land portion was 1.50.

The loss tangent LTc at 30°C of the cap layer was 0.24. The loss tangent LTm at 30°C of the intermediate layer was 0.15. The ratio (LTc/LTm) of the loss tangent LTc to the loss tangent LTm was 160%. The loss tangent LTb at 30°C of the base layer was 0.10.

### [Comparative Example 1 not being part of the invention]

A tire of Comparative Example 1 not being part of the invention is a conventional tire including a tread composed of two layers, that is, a cap layer and a base layer. In Comparative Example 1 not being part of the invention, the radius Rc of the center contour line was set to 450 mm. The configuration of the base layer is the same as the configuration of the base layer of Example 1.

In Comparative Example 1 not being part of the invention, the loss tangent LTc at 30°C of the cap layer was 0.22.

The configuration other than the tread is the same as the configuration of Example 1.

### [Example 2]

A tire of Example 2 was obtained in the same manner as Example 1, except that the radius Rc of the center curved contour line was set as shown in Table 2 below.

In Example 2, similar to Example 1, the first middle land portion is the longest land portion, and the second shoulder land portion was the shortest land portion.

### [Comparative Example 2 not being part of the invention]

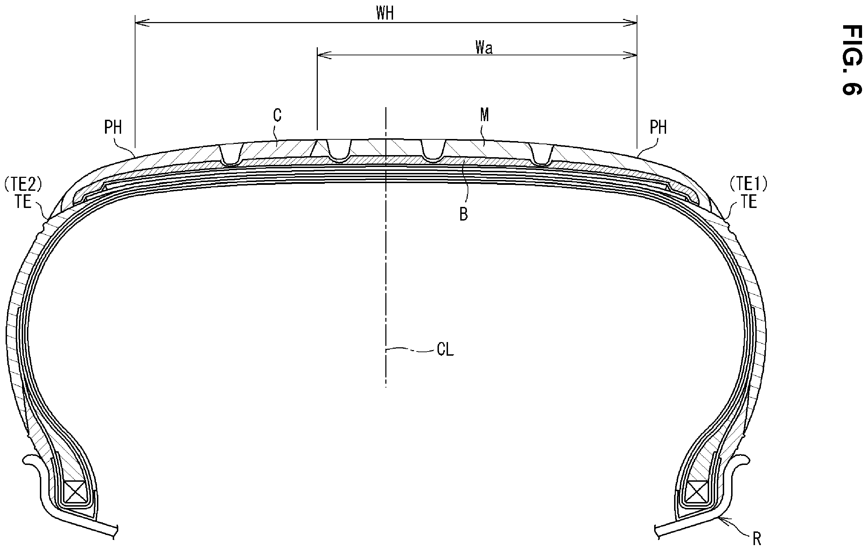

A tire of Comparative Example 2 not being part of the invention was obtained in the same manner as Example 2, except that a tread having the structure shown in FIG. 6 was used. The tread of Comparative Example 2 not being part of the invention includes a cap layer C, an intermediate layer M, and a base layer B. The materials of the cap layer C, the intermediate layer M, and the base layer B are the same as the materials of the cap layer, the intermediate layer, and the base layer of Example 1.

In Comparative Example 2 not being part of the invention, the intermediate layer M was stacked on the base layer B on the first end TE1 side, and the cap layer C was stacked on the base layer B on the second end TE2 side.

The ratio (Wa/WH) of the distance Wa in the axial direction from the standard ground-contact end PH on the first end TE1 side to the boundary between the cap layer and the intermediate layer to the ground-contact width WH of the standard ground-contact surface was 68%. The ratio (Wa/WH) is shown in the cell for "WM/WH" in Table 1 below.

### [Comparative Example 3 not being part of the invention]

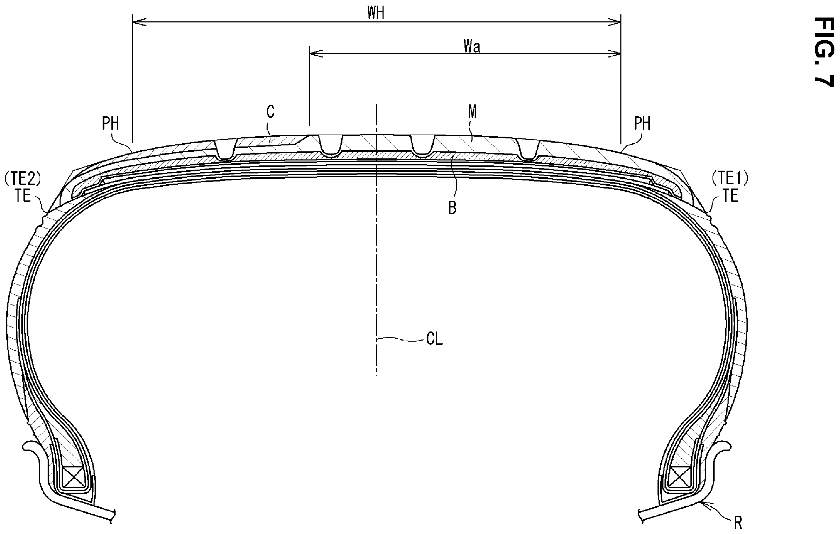

A tire of Comparative Example 3 not being part of the invention was obtained in the same manner as Example 2, except that a tread having the structure shown in FIG. 7 was used.

In Comparative Example 3 not being part of the invention, an intermediate layer M was stacked on a base layer B. The first end TE1 side of the tread was composed of two layers, that is, the intermediate layer M and the base layer B, and the second end TE2 side of the tread was composed of three layers, that is, a cap layer C, the intermediate layer M, and the base layer B.

The ratio (Wa/WH) of the distance Wa in the axial direction from the standard ground-contact end PH on the first end TE1 side to the boundary between the cap layer and the intermediate layer to the ground-contact width WH of the standard ground-contact surface was 68%. The ratio (Wa/WH) is shown in the cell for "WM/WH" in Table 1 below.

In Comparative Example 3 not being part of the invention, similar to Example 2, the first middle land portion was the longest land portion, and the second shoulder land portion was the shortest land portion. The ratio of the thickness of the intermediate layer to the total thickness of the cap layer and the intermediate layer in the shortest land portion was equal to that of Example 2.

### [Example 3]

A tire of Example 3 was obtained in the same manner as Example 1, except that the ratio (WM/WH) was set as shown in Table 2 below.

### [Examples 4 and 5]

Tires of Examples 4 and 5 were obtained in the same manner as Example 1, except that the thickness TL and the thickness TS were changed such that the ratio (TL/TS) was set as shown in Table 2 below.

### [Rolling Resistance Coefficient (RRC)]

Using a rolling resistance testing machine, a rolling resistance coefficient (RRC) was measured when a test tire ran on a drum at a speed of 80 km/h under the following conditions. The results are shown as indexes in Table 1 and Table 2 below with the result of Comparative Example 1 not being part of the invention being regarded as 100. The higher the value is, the lower the rolling resistance of the tire is.
Rim: 19×7J
Internal pressure: 210 kPa
Vertical load: 6.08 kN

### [Wet Performance (WET-NEW) of New Tires]

New test tires were fitted onto rims (size = 19×7) and inflated with air to adjust the internal pressures of the tires to 230 kPa. The tires were mounted to a test vehicle (SUV produced in Japan). The test vehicle was driven on a test course with a wet road surface (water film thickness = 1.4 mm) so as to perform steady cornering, and the limit speed was measured. The results are shown as indexes in the cells for "WET (NEW)" in Tables 1 and 2 below with the result of Comparative Example 1 not being part of the invention being regarded as 100. The higher the value is, the higher the limit speed is and the better the wet performance of the tire is.

### [Wet Performance (WET-OLD) of Worn Tires]

New test tires were fitted to rims (size = 19×7.5J) and inflated with air to adjust the internal pressures of the tires to 230 kPa. The tires were mounted to a test vehicle (SUV produced in Japan). The test vehicle was driven on a test course with a dry asphalt road surface to wear the tread of each tire. The tread was worn until the groove depth of the circumferential groove reached 50% of the groove depth of the new tire. Then, the test vehicle was driven on a test course with a wet road surface (water film thickness = 1.4 mm) so as to perform steady cornering, and the limit speed was measured. The results are shown as indexes in the cells for "WET (OLD)" in Tables 1 and 2 below with the result of Comparative Example 1 not being part of the invention being regarded as 100. The higher the value is, the higher the limit speed is and the better the wet performance of the tire is.

**[Table 1]**

| | | Comparative Example 1 not being part of the invention | Comparative Example 2 not being part of the invention | Comparative Example 3 not being part of the invention | Example 1 |
|---|---|---|---|---|---|
| Structure | | - | FIG. 6 | FIG. 7 | FIG. 1 |
| Rc [mm] | | 450 | 500 | 500 | 750 |
| WM/WH [%] | | - | 68 | 68 | 68 |
| TL/TS [-] | | - | - | - | 1.50 |
| RRC | | 100 | 118 | 127 | 128 |
| WET | NEW | 100 | 115 | 120 | 130 |
| | OLD | 100 | 129 | 129 | 129 |

**[Table 2]**

| | | Example 2 | Example 3 | Example 4 | Example 5 |
|---|---|---|---|---|---|
| Structure | | FIG. 1 | FIG. 1 | FIG. 1 | FIG. 1 |
| Rc [mm] | | 500 | 750 | 750 | 750 |
| WM/WH [%] | | 68 | 47 | 68 | 68 |
| TL/TS [-] | | 1.50 | 1.50 | 2.56 | 3.50 |
| RRC | | 125 | 124 | 126 | 122 |
| WET | NEW | 125 | 132 | 132 | 132 |
| | OLD | 129 | 130 | 129 | 129 |

As shown in Tables 1 and 2, it is confirmed that, in each Example, it is possible to achieve improvement of wet performance while reducing rolling resistance. From the evaluation results, advantages of the present invention are clear.

The above-described technology capable of achieving improvement of wet performance while reducing rolling resistance can also be applied to various tires.

## Claims

1. A tire (2) comprising a tread (4) forming a tread surface (T), wherein
a direction of the tread (4) with respect to a vehicle is designated,
of both ends (TE) of the tread (4), an end located on an inner side in a width direction of the vehicle is a first end (TE1), and an end located on an outer side in the width direction of the vehicle is a second end (TE2),
the tread (4) includes a base layer (44), an intermediate layer (46) located outward of the base layer (44) in a radial direction and covering the base layer (44), and a cap layer (48) located outward of the intermediate layer (46) in the radial direction and covering the intermediate layer (46),
the cap layer (48) includes the tread surface (T),
a loss tangent (LTm) at 30°C of the intermediate layer (46) is lower than a loss tangent (LTc) at 30°C of the cap layer (48),
a loss tangent (LTb) at 30°C of the base layer (44) is lower than the loss tangent (LTm) at 30°C of the intermediate layer (46), wherein the loss tangents (LTm, LTb, LTc) are determined according to the standards of JIS K6394 at a temperature of 30°C, at an initial strain of 10%, at a dynamic strain of 2%, at a frequency of 10 Hz, under the deformation mode tension,
at least three circumferential grooves (24, 24s, 24m) are formed on the tread (4), whereby at least four land portions (26, 26s, 26m, 26c) are formed in the tread (4),
a ground-contact surface obtained when a load that is 50% of a normal load is applied to the tire (2) and the tire (2) is brought into contact with a flat road surface in a state where the tire (2) is fitted on a normal rim (R), an internal pressure of the tire (2) is adjusted to a normal internal pressure, and a camber angle of the tire (2) is set to -1°, is a reference ground-contact surface,
in the reference ground-contact surface, a land portion (26, 26m1) having a longest ground-contact length is a longest land portion (26w), and a land portion (26, 26s2) having a shortest ground-contact length is a shortest land portion (26n),
in the reference ground-contact surface, the longest land portion (26w) is formed in an inside tread (4a) which is located on the inner side in a width direction of the vehicle, and the shortest land portion (26n) is formed in an outside tread (4b) which is located on the outer side in a width direction of the vehicle, and
a ratio (TL/TS) of a thickness (TL) of the intermediate layer (46) in the longest land portion (26w) to a thickness (TS) of the intermediate layer (46) in the shortest land portion (26n) is greater than 1.0 and not greater than 3.5.

2. The tire (2) according to claim 1, wherein the intermediate layer (46) is thicker on the first end (TE1) side and thinner on the second end (TE2) side.

3. The tire (2) according to claim 2, wherein
a ground-contact surface obtained when a load that is 70% of a normal load is applied to the tire (2) and the tire (2) is brought into contact with a flat road surface in a state where the tire (2) is fitted on the normal rim (R), the internal pressure of the tire (2) is adjusted to 230 kPa, and the camber angle of the tire (2) is set to 0°, is a standard ground-contact surface, and
a ratio (WM/WH) of a width (WM) which is a distance in the axial direction from a boundary (PB) between a thicker zone of the intermediate layer (46) on the first end (TE1) side and a thinner zone of the intermediate layer (46) on the second end (TE2) side to a standard ground-contact end (PH) corresponding to an outer end in the axial direction of a ground-contact surface of the tire (2) that is in contact with a road surface to a ground-contact width (WH) of the standard ground-contact surface in the standard ground-contact surface is not less than 40% and not greater than 100%.

4. The tire (2) according to any one of claims 1 to 3, wherein
in a meridian cross-section of the tire (2) in a state where the tire (2) is fitted on the normal rim (R), the internal pressure of the tire (2) is adjusted to 230 kPa, and no load is applied to the tire (2), a contour of the tread surface (T) is represented by a plurality of curved contour lines each composed of an arc and aligned in the axial direction,
a curved contour line located at a center, among the plurality of curved contour lines, is a center curved contour line, and
the center curved contour line has a radius (Rc) of not less than 500 mm and not greater than 1000 mm.

5. The tire (2) according to any one of claims 1 to 4, wherein a ratio (LTc/LTm) of the loss tangent (LTc) at 30°C of the cap layer (48) to the loss tangent (LTm) at 30°C of the intermediate layer (46) is not less than 125% and not greater than 200%, wherein the loss tangents (LTm, LTc) are determined according to the standards of JIS K6394 at a temperature of 30°C, at an initial strain of 10%, at a dynamic strain of 2%, at a frequency of 10 Hz, under the deformation mode tension.

## Patentansprüche

1. Reifen (2) mit einer Lauffläche (4), die eine Laufflächenoberfläche (T) bildet, wobei
eine Richtung der Lauffläche (4) in Bezug auf ein Fahrzeug festgelegt ist,
von beiden Enden (TE) der Lauffläche (4) ein Ende, das sich auf einer inneren Seite in einer Breitenrichtung des Fahrzeugs befindet, ein erstes Ende (TE1) ist, und ein Ende, das sich auf einer äußeren Seite in der Breitenrichtung des Fahrzeugs befindet, ein zweites Ende (TE2) ist,
die Lauffläche (4) eine Basisschicht (44), eine Zwischenschicht (46), die in einer Radialrichtung außen von der Basisschicht (44) angeordnet ist und die Basisschicht (44) bedeckt, und eine Deckschicht (48) umfasst, die in der Radialrichtung außen von der Zwischenschicht (46) angeordnet ist und die Zwischenschicht (46) bedeckt,
die Deckschicht (48) die Laufflächenoberfläche (T) aufweist,
ein Verlusttangens (LTm) bei 30°C der Zwischenschicht (46) kleiner ist als ein Verlusttangens (LTc) bei 30°C der Deckschicht (48),
ein Verlusttangens (LTb) bei 30°C der Basisschicht (44) kleiner ist als der Verlusttangens (LTm) bei 30°C der Zwischenschicht (46), wobei die Verlusttangens (LTm, LTb, LTc) gemäß den Standards von JIS K6394 bei einer Temperatur von 30°C, bei einer Anfangsdehnung von 10 %, bei einer dynamischen Dehnung von 2 %, bei einer Frequenz von 10 Hz, unter dem Verformungsmodus Zug bestimmt werden,
zumindest drei Umfangsrillen (24, 24s, 24m) auf der Lauffläche (4) ausgebildet sind, wobei zumindest vier Stegabschnitte (26, 26s, 26m, 26c) in der Lauffläche (4) ausgebildet sind,
eine Bodenkontaktfläche, die erhalten wird, wenn eine Last, die 50 % einer normalen Last ist, auf dem Reifen (2) aufgebracht ist und der Reifen (2) in Kontakt mit einer flachen Straßenoberfläche in einem Zustand gebracht ist, in dem der Reifen (2) auf eine normale Felge (R) aufgezogen ist, ein Innendruck des Reifens (2) auf einen normalen Innendruck eingestellt ist und ein Sturzwinkel des Reifens (2) auf -1° eingestellt ist, eine Referenzbodenkontaktfläche ist,
in der Referenzbodenkontaktfläche ein Stegabschnitt (26, 26m1) mit einer längsten Bodenkontaktlänge ein längster Stegabschnitt (26w) ist, und ein Stegabschnitt (26, 26s2) mit einer kürzesten Bodenkontaktlänge ein kürzester Stegabschnitt (26n) ist,
in der Referenzbodenkontaktfläche der längste Stegabschnitt (26w) in einer inneren Lauffläche (4a) ausgebildet ist, die in einer Breitenrichtung des Fahrzeugs auf der inneren Seite angeordnet ist, und der kürzeste Stegabschnitt (26n) in einer äußeren Lauffläche (4b) ausgebildet ist, die in einer Breitenrichtung des Fahrzeugs auf der äußeren Seite angeordnet ist, und
ein Verhältnis (TL/TS) einer Dicke (TL) der Zwischenschicht (46) in dem längsten Stegabschnitt (26w) zu einer Dicke (TS) der Zwischenschicht (46) in dem kürzesten Stegabschnitt (26n) größer als 1,0 und nicht größer als 3,5 ist.

2. Reifen (2) nach Anspruch 1, wobei die Zwischenschicht (46) auf der Seite des ersten Endes (TE1) dicker und auf der Seite des zweiten Endes (TE2) dünner ist.

3. Reifen (2) nach Anspruch 2, wobei
eine Bodenkontaktfläche, die erhalten wird, wenn eine Last, die 70 % einer normalen Last ist, auf dem Reifen (2) aufgebracht ist und der Reifen (2) in Kontakt mit einer flachen Straßenoberfläche in einem Zustand gebracht ist, in dem der Reifen (2) auf die normale Felge (R) aufgezogen ist, der Innendruck des Reifens (2) auf 230 kPa eingestellt ist und der Sturzwinkel des Reifens (2) auf 0° eingestellt ist, eine Standardbodenkontaktfläche ist, und
ein Verhältnis (WM/WH) einer Breite (WM), die ein Abstand in der Axialrichtung von einer Grenze (PB) zwischen einer dickeren Zone der Zwischenschicht (46) auf der Seite des ersten Endes (TE1) und einer dünneren Zone der Zwischenschicht (46) auf der Seite des zweiten Endes (TE2) ist, zu einem Standardbodenkontaktende (PH), das einem äußeren Ende in der Axialrichtung einer Bodenkontaktfläche des Reifens (2) entspricht, die in Kontakt mit einer Straßenoberfläche ist, zu einer Bodenkontaktbreite (WH) der Standardbodenkontaktfläche in der Standardbodenkontaktfläche nicht kleiner als 40 % und nicht größer als 100 % ist.

4. Reifen (2) nach einem der Ansprüche 1 bis 3, wobei
in einem Meridianquerschnitt des Reifens (2) in einem Zustand, in dem der Reifen (2) auf die normale Felge (R) aufgezogen ist, der Innendruck des Reifens (2) auf 230 kPa eingestellt ist und keine Last auf den Reifen (2) aufgebracht ist, eine Kontur der Laufflächenoberfläche (T) durch eine Vielzahl von gekrümmten Konturlinien dargestellt ist, die jeweils aus einem Bogen bestehen und in der Axialrichtung ausgerichtet sind,
eine gekrümmte Konturlinie, die sich unter der Vielzahl von gekrümmten Konturlinien in der Mitte befindet, eine mittlere gekrümmte Konturlinie ist, und
die mittlere gekrümmte Konturlinie einen Radius (Rc) von nicht weniger als 500 mm und nicht mehr als 1000 mm hat.

5. Reifen (2) nach einem der Ansprüche 1 bis 4, wobei ein Verhältnis (LTc/LTm) zwischen dem Verlusttangens (LTc) bei 30°C der Deckschicht (48) und dem Verlusttangens (LTm) bei 30°C der Zwischenschicht (46) nicht kleiner als 125 % und nicht größer als 200 % ist, wobei die Verlusttangens (LTm, LTc) gemäß den Standards von JIS K6394 bei einer Temperatur von 30°C, bei einer Anfangsdehnung von 10 %, bei einer dynamischen Dehnung von 2 %, bei einer Frequenz von 10 Hz, unter dem Verformungsmodus Zug bestimmt werden.

## Revendications

1. Pneu (2), comprenant une bande de roulement (4) formant une surface de bande de roulement (T), dans lequel,
une direction de la bande de roulement (4) par rapport à un véhicule est désignée,
de deux extrémités (TE) de la bande de roulement (4), une extrémité située sur un côté intérieur dans une direction de largeur du véhicule est une première extrémité (TE1), et une extrémité située sur un côté extérieur dans la direction de largeur du véhicule est une seconde extrémité (TE2),
la bande de roulement (4) inclut une couche de base (44), une couche intermédiaire (46) située à l'extérieur de la couche de base (44) dans une direction radiale et couvrant la couche de base (44), et une couche de recouvrement (48) située à l'extérieur de la couche intermédiaire (46) dans la direction radiale et couvrant la couche intermédiaire (46),
la couche de recouvrement (48) inclut la surface de roulement (T),
une tangente de perte (LTm) à 30 °C de la couche intermédiaire (46) est inférieure à une tangente de perte (LTc) à 30 °C de la couche de recouvrement (48),
une tangente de perte (LTb) à 30 °C de la couche de base (44) est inférieure à la tangente de perte (LTm) à 30 °C de la couche intermédiaire (46), dans lequel les tangentes de perte (LTm, LTb, LTc) sont déterminées selon les normes de JIS K6394 à une température de 30 °C, à une contrainte initiale de 10 %, à une contrainte dynamique de 2 %, à une fréquence de 10 Hz, sous la tension de mode de déformation,
au moins trois rainures circonférentielles (24, 24s, 24m) sont formées sur la bande de roulement (4), selon lequel au moins quatre parties blocs (26, 26s, 26m, 26c) sont formées dans la bande de roulement (4),
une surface de contact avec le sol, obtenue lorsqu'une charge qui fait 50 % d'une charge normale est appliquée au pneu (2) et que le pneu (2) est mis en contact avec une surface de route plate dans un état où le pneu (2) est installé sur une jante normale (R), une pression interne du pneu (2) est ajustée à une pression interne normale, et un angle de cambrure du pneu (2) est réglé à -1 °, est une surface de contact avec le sol de référence,
dans la surface de contact avec le sol de référence, une partie bloc (26, 26m1) présentant une longueur de contact avec le sol la plus longue est une partie bloc la plus longue (26w), et une partie bloc (26, 26s2) présentant une longueur de contact avec le sol la plus courte est une partie bloc la plus courte (26n),
dans la surface de contact avec le sol de référence, la partie bloc la plus longue (26w) est formée dans une bande de roulement intérieure (4a) qui est située sur le côté intérieur dans une direction de largeur du véhicule, et la partie bloc la plus courte (26n) est formée dans une bande de roulement extérieure (4b) qui est située sur le côté extérieur dans une direction de largeur du véhicule, et
un rapport (TL/TS) d'une épaisseur (TL) de la couche intermédiaire (46) dans la partie bloc la plus longue (26w) par rapport à une épaisseur (TS) de la couche intermédiaire (46) dans la partie bloc la plus courte (26n) est supérieur à 1,0 et n'est pas supérieur à 3,5.

2. Pneu (2) selon la revendication 1, dans lequel la couche intermédiaire (46) est plus épaisse sur le côté première extrémité (TE1) et plus mince sur le côté seconde extrémité (TE2).

3. Pneu (2) selon la revendication 2, dans lequel
une surface de contact avec le sol, obtenue lorsqu'une charge qui fait 70 % d'une charge normale est appliquée au pneu (2) et que le pneu (2) est mis en contact avec une surface de route plate dans un état où le pneu (2) est installé sur une jante normale (R), une pression interne du pneu (2) est ajustée à 230 kPa, et un angle de cambrure du pneu (2) est réglé à 0 °, est une surface de contact avec le sol standard, et
un rapport (WM/WH) d'une largeur (WM) qui est une distance dans la direction axiale depuis une limite (PB) entre une zone plus épaisse de la couche intermédiaire (46) sur le côté première extrémité (TE1) et une zone plus mince de la couche intermédiaire (46) sur le côté seconde extrémité (TE2) jusqu'à une extrémité de contact avec le sol standard (PH) correspondant à une extrémité extérieure dans la direction axiale d'une surface de contact avec le sol du pneu (2) qui est en contact avec une surface de route sur une largeur de contact avec le sol (WH) de la surface de contact avec le sol standard dans la surface de contact avec le sol standard n'est pas inférieure à 40 % et n'est pas supérieur à 100 %.

4. Pneu (2) selon l'une quelconque des revendications 1 à 3, dans lequel
dans une section transversale méridienne du pneu (2) dans un état où le pneu (2) est installé sur la jante normale (R), la pression interne du pneu (2) est ajustée à 230 kPa, et aucune charge n'est appliqué au pneu (2), un contour de la surface de roulement (T) est représenté par une pluralité de lignes de contour courbées composées chacune d'un arc et alignées dans la direction axiale,
une ligne de contour courbée située à un centre, parmi la pluralité de lignes de contour courbées, est une ligne de contour courbée centrale, et
la ligne de contour courbée centrale présente un rayon (Rc) non inférieur à 500 mm et non supérieur à 1000 mm.

5. Pneu (2) selon l'une quelconque des revendications 1 à 4, dans lequel un rapport (LTc/LTm) de la tangente de perte (LTc) à 30 °C de la couche de recouvrement (48) sur la tangente de perte (LTm) à 30 °C de la couche intermédiaire (46) n'est pas inférieur à 125 % et n'est pas supérieur à 200 %, dans lequel les tangentes de perte (LTm, LTc) sont déterminées selon les normes de JIS K6394 à une température de 30 °C, à une contrainte initiale de 10 %, à une contrainte dynamique de 2 %, à une fréquence de 10 Hz, sous la tension de mode de déformation.
